# EUROPEAN PATENT SPECIFICATION

(11) **EP 1 070 451 B1**
(45) Date of publication and mention of the grant of the patent: **02.05.2003**
(21) Application number: 00203958.4
(22) Date of filing: 12.06.1995
(51) Int. Cl.: A01J 5/017, A01K 1/12

(54) **A method for automatically milking animals**
Verfahren zum automatischen Melken von Tieren
Méthode pour la traite automatique d'animaux

(30) Priority: 17.06.1994 NL 9400992
(43) Date of publication of application: 24.01.2001
(62) Divisional of application: 95920309.2
(73) Proprietor: MAASLAND N.V., 3155 PD Maasland (NL)
(72) Inventor: van der Lely, Olaf, 6300 Zug (CH)
(74) Representative: Corten, Maurice Jean F.M.

(56) References cited:
- EP-A- 0 091 892
- EP-A- 0 551 957
- DE-A- 3 702 465
- NL-A- 8 602 505

## Description

The present invention relates to a method according to the preamble of claim 1.

Such a method is known from EP-A-091892. This known method relates to milking loose housing cows which find their way individually to one or more feeding stalls where they are automatically identified and fed with the aid of a computer connected to the identification and feeding means. The computer is used for recording of the points of time each cow is milked and to activate a device in connection with the identification of a cow arriving at the feeding stall to eat, and provided that a predetermined time has passed after the preceding milking operation, which device is activated for automatic application of the milking means to the cow's udder and for starting a milking operation.

In particular in a loose housing system where the animals are allowed to move about freely and are able to report at any time at a milking parlour in order to be milked there, whilst they have been possibly lured by the fact that they may be given concentrates, there is a need for criteria which must be met in order that an animal which reports at the milking parlour can actually be milked. For it is not intended to milk an animal when it has been milked shortly before.

Accordingly, it is an object of the invention to provide an alternative method for automatically milking animals such that there are included criteria which indicate when an animal, after the last milking, is allowed to be milked again.

In accordance with the invention, the method as described in the opening paragraph is characterized in that the defined numerical value corresponds to the quantity of produced milk which has been obtained after the last milking of the animal in question. In other words, as criterion to decide whether or not an animal reporting at the milking parlour is allowed to be milked, the quantity of milk obtained from other animals since the last milking of the relevant animal is applied. Although, it applies that the quantity of produced milk can be recorded by means of a separate measuring apparatus which is coupled to e.g. a milk meter provided in the implement, here, it is preferable to keep count of this quantity of milk in the computer system.

When the condition on which the said signal is generated is fulfilled, it is possible to milk an animal which is in the milking parlour, and when this condition is not fulfilled, it is possible to send the animal which is in the milking parlour out of the milking parlour without milking it. However, it is preferable to take care that, on fulfilment of the condition on which the said signal is generated, this signal causes that the animal is admitted to a milking parlour. In other words, if this condition has not been fulfilled, the animal will not even be admitted to the milking parlour.

To be able to decide whether or not an animal reporting at the milking parlour is allowed to be milked, the animal shall have been identified, in order it can be established whether or not the criteria described hereinbefore are met. The animal recognition system is used for this purpose. Any recognisable characteristic of the animal itself or any means for recognition provided on the animal can be suitable for identification of the animal; however, in practice, a transponder attached to a strap round the neck of an animal is frequently used. This transponder is suitable for operation in conjunction with a sensor connected to the computer system. This sensor will be disposed in or in the vicinity of the milking parlour. This means that the animal, as soon as the animal has approached the milking parlour to a sufficiently short distance or has entered the selection box, is identified there, so that on account of one of the criteria mentioned hereinbefore and the data in the computer system it can be decided whether or not the animal is allowed to be milked. When use is made of a selection box which is entered by the animal before she is possibly admitted to the milking parlour, this sensor will preferably be disposed in the selection box. When the animal has entered the selection box and has been identified there, while subsequently it has been established that the condition to the generation of the mentioned signal is fulfilled, the animal will be admitted to the milking parlour in order to be milked there. When the condition to the generation of the mentioned signal is not fulfilled, the computer system will generate a different signal which causes that the animal is led from the selection box directly to the area where otherwise she would have been sent to via the milking parlour. In a concrete embodiment of the invention, for this purpose the selection box is provided with an entry door, a first exit door to the milking parlour and a second exit door giving access to that part of the area to which the exit door of the milking parlour, too, gives access. The first exit door can then be opened by means of the firstmentioned signal generated by the computer, while the second exit door can be opened by means of the other signal generated by the computer.

The selection box and the milking parlour are preferably arranged in a loose housing system; this may then be laid out such that an animal leaving the milking parlour or selection box has to cover a minimum walking distance to become able to report again at the milking parlour or the selection box.

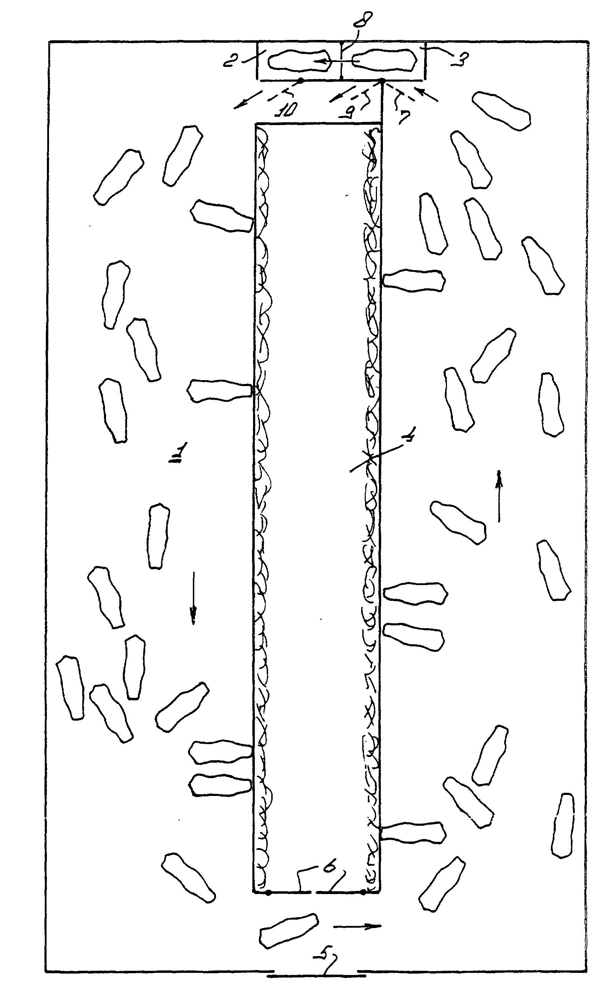

The invention will now be further explained with reference to the accompanying drawing, which shows a schematic representation of the implement according to the invention.

The drawing shows a loose housing system 1, in which there is disposed a milking parlour 2 and a selection box 3 along one of the short sides thereof. The loose housing 1 has been divided into two parts segregated by a feeding passage 4. Through doors 5 and 6, animal feedstuffs can be put into a manger or feed troughs along the sides of the feed passage. Furthermore, in the loose housing there may be optionally provided cow cubicles e.g. along the longitudinal sides of the loose housing system. It should be noticed that these cow cubicles are not included in the drawing.

The selection box 3 has an entry door 7, a first exit door 8 giving access to the milking parlour 2, and a second exit door 9 giving access to that part of the loose housing system 1 to which is also given access by the exit door 10 of the milking parlour 2. When the selection box 3 is free, an animal may enter it. Due to the fact that in the selection box 3 there is disposed a sensor which communicates with a (non-shown) computer system, and also that each animal bears a transponder attached to a neck strap, which transponder operates in conjunction with the sensor arranged in the selection box 3, an identification signal can be generated by the sensor and sent to the computer system, so that the animal can be identified. The combination of the transponder on the neck of each of the animals, the sensor in the selection box and the computer system constitutes a known per se animal recognition system. In the computer system, a criterion should be included which is determinative of the issue whether an animal in the milking parlour is to be milked or, in other words, whether an animal may be admitted from the selection box 3 to the milking parlour 2 to be milked there or that she is to be sent directly through the second exit door 9 to that part of the loose housing system to which the animal is also sent after its milking turn. When the animal passes through the second exit door 9 of the selection box 3 or the exit door 10 of the milking parlour, the animal should walk round the loose housing before she is able to report again at the selection box 3, whereby an animal not yet eligible for milking is prevented from again reporting immediately at the entrance of the selection box and re-entering it. For an animal may tend to do so, when she is given concentrates in the selection box or in the milking parlour.

The quantity of produced milk which has been obtained since the latest milking turn of the animal which has reported at the milking parlour applies as a criterion for making the decision whether an animal is eligible for milking or not. When this quantity exceeds a predetermined numerical value, so many other animals have been milked since the latest milking turn of the relevant animal that the animal which reported herself is eligible for milking. Then the first signal produced by the computer system makes that the exit door 8 from the selection box to the milking parlour is released, provided that the milking parlour is unoccupied.

The criterion given here is of major importance when in the milking parlour there is provided a milking machine which is suitable for automatically connecting teat cups to the teats of an animal, for automatically milking the animal, and for automatically disconnecting the teat cups from the animal. Just in such a system, the farmer has no influence on the order in which the animals, which are indeed allowed to walk freely about in the loose housing system, go to the selection box in order to be directed from there to the milking parlour and to be milked there. Due to the fact that the animals can receive concentrates in the selection box or possibly in the milking parlour, too, the animals are lured towards the selection box or the milking parlour. On the other hand, the animals are not allowed to report again at the selection box for admission to the milking parlour within too short a time after they have been milked. By including the mentioned criterion in the computer system, a desired circulation of the animals through the loose housing system, the selection box and the milking parlour is realized.

The milking control system set forth hereinbefore is adaptable to the individual animals. When it is intended to milk only particular animals more frequently than other animals, the numerical value can also be made dependent on a given animal and, more particularly, dependent on the stage of the lactation period in which the animal is. As a rule it applies that an animal which has calved recently can be milked more frequently than otherwise.

The invention is by no means limited to the exemplary embodiment of the invention set forth here, but it also relates to all kinds of modifications thereto, of course, as far as falling within the scope of the accompanying claims.

## Claims

1. A method for automatically milking animals, such as cows, by means of a milking machine being under the control of a computer system for automatically connecting teat cups to the teats of an animal, for automatically milking the animal, and for automatically disconnecting the teat cups from the animal, and by means of an animal recognition system being in communication with the computer system, whereby an animal is allowed to be milked again if a signal exceeding a defined numerical value is generated by the computer system, **characterized in that** the defined numerical value corresponds to the quantity of produced milk which has been obtained after the last milking of the animal in question.

2. A method according to claim 1, **characterized in that** the quantity of produced milk which has been obtained after the last milking of an animal which reports at the implement is recorded in the computer system.

3. A method according to claim 1 or 2, **characterized in that**, on fulfilment of the condition on which the said signal is generated, this signal causes that the animal is admitted to a milking parlour (2).

4. A method according to any one of the preceding claims, **characterized in that** the animal recognition system comprises a sensor operating in conjunction with a transponder borne by the animals, which sensor is disposed in or in the vicinity of the implement.

5. A method according to claim 4, **characterized in that** the sensor is disposed in a selection (3) box which is entered by an animal prior to being capable of obtaining admission to a milking parlour (2).

6. A method according to claim 5, **characterized in that**, on non-fulfilment of the condition to the generation of the mentioned signal, the computer system generates a different signal which causes that the animal is led from the selection box (3) directly to the area where otherwise she would have been sent to via the milking parlour (2).

7. A method according to claim 6, **characterized in that** the selection box (3) is provided with an entry door (7), a first exit door (8) to the milking parlour (2) and a second exit door (9) giving access to that part of the area to which the exit door (10) of the milking parlour (2), too, gives access.

8. A method according to claim 7, **characterized in that** the first exit door (8) can be opened by means of the firstmentioned signal generated by the computer, while the second exit door (9) can be opened by means of the other signal generated by the computer.

9. A method according to any one of claims 5 to 7, **characterized in that** the selection box (3) and the milking parlour (2) are disposed in a loose housing system (1).

10. A method according to claim 9, **characterized in that** the loose housing system (1) is laid out such that an animal leaving the milking parlour (2) or selection box (13) has to cover a minimum walking distance to become able to report again at the milking parlour (2) or the selection box (3).

## Patentansprüche

1. Verfahren zum automatischen Melken von Tieren, wie z. B. Kühen, mit Hilfe einer Melkmaschine, die von einem Computersystem gesteuert wird, um automatisch Zitzenbecher an die Zitzen eines Tieres anzuschließen, um das Tier automatisch zu melken und um die Zitzenbecher automatisch von dem Tier abzunehmen, sowie mit Hilfe eines mit dem Computersystem verbundenen Tiererkennungssystems, wobei es einem Tier ermöglicht wird, erneut gemolken zu werden, wenn von dem Computersystem ein einen bestimmten numerischen Wert übersteigendes Signal erzeugt wird,
**dadurch gekennzeichnet, daß** der bestimmte numerische Wert der Menge an erzeugter Milch entspricht, die nach dem letzten Melken des betreffenden Tieres gewonnen wurde.

2. Verfahren nach Anspruch 1,
**dadurch gekennzeichnet, daß** die Menge an erzeugter Milch, die nach dem letzten Melken eines sich bei der Vorrichtung einfindenden Tieres gewonnen wurde, in dem Computersystem aufgezeichnet wird.

3. Verfahren nach Anspruch 1 oder 2,
**dadurch gekennzeichnet, daß** bei Erfüllung der Bedingung und Erzeugung des Signals dieses Signal bewirkt, daß dem Tier der Zutritt zu einem Melkstand (2) gestattet wird.

4. Verfahren nach einem der vorhergehenden Ansprüche,
**dadurch gekennzeichnet, daß** das Tiererkennungssystem einen Sensor umfaßt, der mit einem von den Tieren getragenen Transponder zusammenwirkt, wobei der Sensor in oder nahe der Vorrichtung angeordnet ist.

5. Verfahren nach Anspruch 4,
**dadurch gekennzeichnet, daß** der Sensor in einer Auswahlbox (3) angeordnet ist, die von einem Tier betreten wird, bevor es Zutritt zu einem Melkstand (2) erhalten kann.

6. Verfahren nach Anspruch 5,
**dadurch gekennzeichnet, daß** bei Nichterfüllen der Bedingung für die Erzeugung des erwähnten Signals das Computersystem ein unterschiedliches Signal erzeugt, das bewirkt, daß das Tier von der Auswahlbox (3) direkt in den Bereich geleitet wird, in den es sonst über den Melkstand (2) geschickt worden wäre.

7. Verfahren nach Anspruch 6,
**dadurch gekennzeichnet, daß** die Auswahlbox (3) eine Eingangstür (7), eine erste Ausgangstür (8) zum Melkstand (2) und eine zweite Ausgangstür (9) aufweist, die Zutritt zu dem Teil des Bereiches gewährt, zu dem auch die Ausgangstür (10) des Melkstandes (2) Zutritt gewährt.

8. Verfahren nach Anspruch 7,
**dadurch gekennzeichnet, daß** die erste Ausgangstür (8) mit Hilfe des erstgenannten, von dem Computer erzeugten Signals geöffnet werden kann, während die zweite Ausgangstür (9) mit Hilfe des anderen von dem Computer erzeugten Signals zu öffnen ist.

9. Verfahren nach einem der Ansprüche 5 bis 7,
**dadurch gekennzeichnet, daß** die Auswahlbox (3) und der Melkstand (2) in einem Laufstallsystem (1) angeordnet sind.

10. Verfahren nach Anspruch 9,
**dadurch gekennzeichnet, daß** das Laufstallsystem (1) derart ausgelegt ist, daß ein Tier, das den Melkstand (2) oder die Auswahlbox (13) verläßt, eine Mindestlaufstrecke zurücklegen muß, um sich erneut bei dem Melkstand (2) oder der Auswahlbox (3) einfinden zu können.

## Revendications

1. Procédé pour la traite automatique d'animaux, tels que des vaches, au moyen d'une machine à traire contrôlée par un système informatique pour relier automatiquement les gobelets trayeurs aux trayons d'un animal, pour traire l'animal automatiquement, et pour déconnecter automatiquement les gobelets trayeurs de l'animal, et au moyen d'un système de reconnaissance de l'animal communiquant avec le système informatique, moyennant quoi un animal est autorisé à être trait à nouveau si un signal excédant une valeur numérique définie est produit par le système informatique, **caractérisé en ce que** la valeur numérique définie correspond à la quantité de lait produit qui a été obtenue après la dernière traite de l'animal en question.

2. Procédé selon la revendication 1, **caractérisé en ce que** la quantité de lait produit qui a été obtenue après la dernière traite d'un animal se présentant au matériel est enregistrée dans le système informatique.

3. Procédé selon la revendication 1 ou 2, **caractérisé en ce que**, en remplissant la condition par laquelle est produit ledit signal, ce signal entraîne l'admission de l'animal vers une salle de traite (2).

4. Procédé selon l'une quelconque des revendications précédentes, **caractérisé en ce que** le système de reconnaissance de l'animal comprend un capteur fonctionnant conjointement avec un transpondeur porté par les animaux, lequel capteur est disposé dans ou dans les environs du matériel.

5. Procédé selon la revendication 4, **caractérisé en ce que** le capteur est disposé dans un box de sélection (3) dans lequel entre un animal avant de pouvoir obtenir l'admission vers une salle de traite (2).

6. Procédé selon la revendication 5, **caractérisé en ce que**, si la condition de la production du signal mentionné n'est pas remplie, le système informatique produit un signal différent qui a pour conséquence que l'animal est mené du box de sélection (3) directement vers la zone où il aurait été envoyé de toute façon via la salle de traite (2).

7. Procédé selon la revendication 6, **caractérisé en ce que** le box de sélection (3) est prévu avec une porte d'entrée (7), une première porte de sortie (8) vers la salle de traite (2) et une seconde porte de sortie (9) donnant accès à cette partie de la zone à laquelle la porte de sortie (10) de la salle de traite (2) donne également accès.

8. Procédé selon la revendication 7, **caractérisé en ce que** la première porte de sortie (8) peut être ouverte au moyen du signal mentionné en premier produit par l'ordinateur, pendant que la seconde porte de sortie (9) peut être ouverte au moyen de l'autre signal produit par l'ordinateur.

9. Procédé selon l'une quelconque des revendications 5 à 7, **caractérisé en ce que** le box de sélection (3) et la salle de traite (2) sont disposés dans un système de stabulation libre (1).

10. Procédé selon la revendication 9, **caractérisé en ce que** le système de stabulation libre (1) est disposé de telle sorte qu'un animal quittant la salle de traite (2) ou le box de sélection (3) doive couvrir une distance de marche minimum pour pouvoir se présenter à nouveau à la salle de traite (2) ou au box de sélection (3).
